# EUROPÄISCHE PATENTSCHRIFT

(11) **EP 2 516 347 B1**
(45) Veröffentlichungstag und Bekanntmachung des Hinweises auf die Patenterteilung: **01.05.2013**
(21) Anmeldenummer: 11707781.8
(22) Anmeldetag: 14.01.2011
(51) Int. Cl.: C04B 28/18, C04B 35/22, C04B 14/04

(54) **HOCHTEMPERATURFESTER HYBRIDWERKSTOFF AUS CALCIUMSILIKAT UND KOHLENSTOFF**
HIGH TEMPERATURE RESISTANT HYBRID MATERIAL OUT OF CALCIUM SILICATE AND CARBON
MATERIAU HYBRIDE RESISTANT À HAUTE TEMPERATURE À BASE DE SILICATE DE CALCIUM ET DE CARBONE.

(30) Priorität: 18.01.2010 DE 102010004933
(43) Veröffentlichungstag der Anmeldung: 31.10.2012
(73) Patentinhaber: Calsitherm Verwaltungs GmbH, 33175 Bad Lippspringe (DE)
(72) Erfinder: HÖLSCHER, Klaus, 33175 Bad Lippspringe (DE); HÖLSCHER, Tobias, 33102 Paderborn (DE); HÜTTNER, Wolf, 33161 Hövelhof (DE); LENGEN, Axel, 33175 Bad Lippspringe (DE); SCHNEIDER, Hans-Jürgen, 09600 Oberschöna (DE); STELLMACH, Winfried, 33175 Bad Lippspringe (DE)
(86) Internationale Anmeldenummer: PCT/DE2011/000034
(87) Internationale Veröffentlichungsnummer: WO 2011/085723

(56) Entgegenhaltungen:
- EP-A1- 0 166 789
- EP-B1- 0 559 741
- VOLKER KRASSELT ET AL: "Technical Ceramics and Insulation Materials made of Calcium Silicate-Production; Properties and Applications", XIV. MEZINARODNI KONFERENCE O ZAROVZDORNYCH MATERIALECH: CSVTS - KONGRESOVY SAL, PRAHA, 20.-21.5.2003: SBORNIK,, 20. Mai 2003 (2003-05-20), Seiten 187-194, XP009129260, ISBN: 978-80-02-01552-9

## Beschreibung

Die Erfindung betrifft einen hochtemperaturfesten keramischen Hybridwerkstoff mit einer Matrix aus Calcium-Silitkat-Hydrat, in die bis zu 40 % Kohlenstoff eingebettet ist.

Ein derartiger Hybridwerkstoff ist aus DE 36 11 403 C2 bekannt. Bei diesem besteht die Matrix aus Xonotlit, dem Wollastonit beigemischt ist und aus Kohlenstofffasern in einer Menge von 0,2 -10 Gew.-%, die aus Polyacrylnitril oder auf der Basis von Pech erzeugt und carbonisiert sind. Die Faserlänge liegt zwischen 3 und 10 mm. Beim bevorzugten Einsatz dieses bekannten Werkstoffes in flüssigen NE-Metallen treten durch Thermoschocks im Kontaktbereich zu der Metallschmelze Mikrorisse auf, die sich entlang der Kohlenstofffasern in den Werkstoff ausbreiten. Dies führt positiverweise zu hohen Brucharbeiten. Andererseits wird fortschreitend die Oberfläche aufgerauht. Zur Glättung und Oberflächenversiegelung sind Coatings notwendig, z. B. Bornitrid oder Graphitslurry. Bei Gießprozessen mit Ölschmierung, z. B. Bolzenguss, dringt Öl in die offenporige Oberfläche des Werkstoffes ein und kann dort vercracken. Damit fehlt das absorbierte und gecrackte Öl für den Gießprozess und muss ständig erneuert werden.

Weiterhin ist aus DE 199 28 300 C1 ein temperaturfester keramischer Werkstoff bekannt, der aus einer Calciumsilikathydrat-Matrix besteht, in die ein plättchenförmiges Material eingelagert ist, dessen Hauptabmessungen 0,5 - 6 mm betragt, einen Gewichtsanteil von 5 - 30 % aufweist und bevorzugt ein Aluminium-Magnesium-Silikat mit einer wabenförmigen Textur ist. Dieses plattchenformige Silikatmaterial dient der Begrenzung von Mikrorissen bei thermischer Wechselbelastung. Die Oberfläche des keramischen Werkstoffes ist porös und trotz glättender Bearbeitung rau, so dass er bei seiner Anwendung in flüssigem NE-Metall mit Coatings wie z. B. Bornitrid- oder Grafitslurry, geglättet werden muss, was zeit-und kostenaufwändig ist Eine Beschichtung mit Bornitrid oder Graphit muss auch hier erneuert werden. In beiden vorgenannten Werkstoffen werden die Coatings mechanisch abgerieben. Bei Gießprozessen, welche mit Ölschmierung unter Verwendung der vorgenannten Werkstoffe ablaufen, cracken die Schmierstoffe bei erhöhten Temperaturen; damit ist ihre Funktion nicht mehr vorhanden. Verbindungen wie Schwefel und Aromaten zersetzen zusätzlich das Werkstoff-Gefüge. Taktzeiten und Gießgeschwindigkeiten werden begrenzt. Es ergeben sich in der Anwendung Stillstandszeiten, weil schlechte oder keine Notlaufeigenschaften gegeben sind. Das führt zu erhöhtem Ausschuss und zusätzlichem Aufwand an technischer Ausrüstung, Personal, Umweltschutz sowie deutlich erhöhtem Energiebedarf.

Weiterhin ist aus der DE 69107 219 T2 ein Material bekannt, das im Wesentlichen aus 15 bis 40 Gew.-% Kalk, 15 bis 40 Gew.-% einer siliziumdioxidhattigen Komponente, 15 bis 50 Gew.-% Wollastonit, 0 bis 15 Gew.-% anorganischer Faser und 0,5 bis 15 Gew.-% organischer Faser mit einem Anteil von 0,5 bis 5 Gew.-% Graphitfaser auf Pechbasis hergestellt wird. Die Grundmasse des Materials weist Calciumsilikathydrat auf. Bei den Graphitfasern auf Pechbasis handelt es sich um Fasern, die nicht nur carbonisiert sind, sondern zusätzlich noch einer Wärmebehandlung bei 2000 °C ausgesetzt werden, welche zur Graphidsierung führt. Die verwendeten Graphitfasern weisen eine Dichte von 1,63 g/cm³ und eine Länge von 3 mm auf. Auch dieses Material weist wegen der Graphitfasern im Einsatz in Gießformen die gleichen Nachteile wie zuvor beschrieben auf

In RÖMPP Online, Version 3.6, Artikel Kohlenstoff-Fasern, ist das aufwendige Herstellverfahren der Graphitfasern beschrieben, die mit einer Vorbehandlung aus organischen Fasern oder aus Pech in eine Zwischenform gebracht werden, und unter Schutzgas bei Temperaturen von 2000 °C - 3000 °C in die hochfeste Form erheblicher Dichte überführt wird. Daraus ergibt sich deren hoher Preis.

Weiterhin ist aus der EP 0 166 789 B1 ein Material bekannt sowie daraus erstellte Formkörper, wobei in einer Calcium-Silikat-Matrix 21-70 Gew.-% Graphitteilchen eingelegt sind, deren Größe 7,5 µm beträgt. Diese winzigen Partikel sind kugelförmig eingeschlossen in Körnern von 5 - 150 µm Durchmesser, aus denen die Formkörper mittels Bindemittel hergestellt werden. Da die Graphitteilchen völlig gekapselt und im Material irregulär angeordnet sind, entfalten sie keine Schmierwirkung an der Oberfläche.

Aufgabe der Erfindung ist es, die Nachteile der vorbekannten keramischen Werkstoffe zu vermeiden und einen Hybridwerkstoff zu schaffen, der nicht benutzbar und resistent gegenüber Leichtmetallschmelzen und deren Schlacken ist, der nicht oder äußerst geringfügig durch Trenn- und Gleitmittel, wie Öle, Öl-Wasser-Suspensionen, infiltrierbar ist sowie hochgradige Selbstschmierungseigenschaft aufweist.

Die Kohlenstoffpartikel mit einer graphitischen Kristallstruktur weisen eine vergleichsweise 10-fach höhere Wärme- und Elektrizitätsleitfähigkeit auf als solche mit ungeordneter Struktur. Erstere homogenisieren und beschleunigen die Temperaturverteilung zwischen einer heißen Grenzzone zu einer Metallschmelze und einer äußeren Stütz- und Haltevorrichtung sowie zur Umgebung deutlich. Zudem ermöglicht die Schichtstruktur der Kohlenstoffkristalle energiedissipierendes Gleiten zum Matrixmaterial im Rahmen differentieller thermischer Ausdehnungen. Dies steht im vorteilhaften Gegensatz zu dem Verhalten der vorbekannten keramischen Plättchen bzw. carbonisierten Kohlenstofffasern.

Der Anteil der Kohlenstoffpartikel mit geordneter graphitischer Kristallstruktur, sollte mindestens 60 % des gesamten Kohlenstoffes betragen. Die Partikel-Abmessungen betragen vorzugsweise 0,01 - 3 mm. Im praktischen Versuchsbetrieb hat sich ein ........... handelsüblicher Kohlenstoff mit einer mittleren Plättchenabmessung von 0.7 mm und einer Maßstreuung zwischen 0,1 und 1 mm bewährt.

Der restliche Kohlenstoffanteil hat einen geringeren Graphitierungsgrad und ungeordnete Graphitkristalle. Ihre Struktur ist weniger plättchenförmig sondern eher körnig mit geringeren Abmessungen als die der Partikel. Ein Kohlenstoffanteil von 1 bis 40 Gew.-% hat sich in Versuchen je nach einer beabsichtigten Anwendung bewährt.

Die Matrix besteht bevorzugt aus dendritischem Xonotlit und/oder Tobermorit. Ihr können zur Erhöhung der Festigkeit bis zu 65 Gew.-% Wollastonitstäbchen beigemischt sein. Diese sollten einen Schlankheitsgrad von wenigstens 1:8 aufweisen. Die Matrix kann zur Erhöhung der Druckfestigkeit auch ein körniges Silikatmaterial von maximal 15 Gew.-% enthalten. Dieses ist beispielsweise Zirkonium-Silikat, Lithiumaluminium-Silikat und/oder Calciummagnesium-Silikat.

Vorteilhaft ist auch die Zugabe von anderen graphitischen Kohlenstoffen wie Ruß, mit bis zu 20 Gew.-%, zur Erhöhung der Partikeldichte und der thermoelektrischen Eigenschaften.

Bei uni- oder biaxialem Verpressen richten sich die Graphitpartikel im wesentlichen flächenparallel zu einander aus. Hierdurch entsteht eine Anisotropie des Hybridwerkstoffes. In Bezug auf die Wärmeleitfähigkeit ergibt sich dadurch die Möglichkeit, gezielt den Wärmefluss zu steuern.

Bei vielen Anwendungen sind hierdurch gezielte Isolationseigenschaften einstellbar.

Bei isostatischer Verpressung entsteht ein isotroper Werkstoff mit gleichverteilter Wärmeleitung in allen Raumrichtungen.

Das neuartige Hybridmaterial weist eine glatte und dichte Oberfläche auf und hat Selbstschmierungseigenschaften. Dies führt im Einsatz zur weitgehenden Einsparung von Trenn- und Schmierstoffen und dadurch der Vermeidung von Produktionsunterbrechungen. Die Produktivität in Strang- und Druckgussverfahren kann im Vergleich zum herkömmlichen Anlagenbetrieb erheblich gesteigert werden. Dies ist eine Konsequenz der verbesserten Standzeiten, oder je nach Gießverfahren der verkürzten Taktzeiten und resultiert auf einem gezielten Einstellen der Wärmeleitfähigkeit und verbesserter mechanischer Stabilität.

Ein weiterer entscheidender Vorteil des neuartigen Hybridwerkstoffes ergibt sich aus einem vier- bis zwanzigfach geringeren Preis der Graphitpartikel gegenüber Kohlenstofffasern.

Die Eigenschaften des Hybridwerkstoffes lassen sich durch den relativen Anteil der Graphitpartikel in erheblichem Maße gezielt beeinflussen. Die Schüttdichte des Graphites beträgt beispielsweise nur 0,08 g/cm³. Die Rohdichte des Hybridwerkstoffes nimmt dadurch von 1,1 g/cm³ bei 0 % Graphitanteil auf 1,0 g/cm³ bei 16 % Graphitartteil ab. Hingegen nimmt die Druckfestigkeit von 11 auf 17 MPa, die Brucharbeit von 5 auf 25 Nm, die Wärmeleitfähigkeit von 0,35 auf 1,65 W/(mK) bei 500 °C in lateraler Richtung und der Elektrische Durchgangswiderstand von 2,3 • 10¹³ auf 265 Ohm • cm, ebenfalls in lateraler Richtung, bei den genannten Graphitdotierungen zu.

Das Hybridmaterial ist bis 1100 °C einsetzbar. In oxidierender Atmosphäre beginnen erst oberhalb von 500 °C die hier neu vorgeschlagenen Kohlenstoffpartikel an der Oberfläche zu oxidieren.

Eine carbonisierte Kohlenstofffaser oxidiert dagegen bereits ab 300°C.

Darüber hinaus ist bei dem neuen Hybridwerkstoff ein wesentlich erhöhter Kohlenstoffanteil vorhanden, sodass die Oxidation des Kohlenstoffes die eingestellte Eigenschaften deutlich weniger negativ beeinflusst.

Die gute Thermoschockbeständigkeit resultiert auch aus der Tatsache, dass die Graphitpartikel beginnendes Risswachstum durch Energiedissipation in den Gefügegrenzen Matrix zu Kohlenstoff stoppen.

Da der Hybridwerkstoff sich hervorragend formgeben und bearbeiten lässt, lassen sich aus ihm vorteilhaft isolierende, nicht benetzende Bauteile zur Fluss- und Mengensteuerung von flüssigen NE-Metall Legierungen und zur Verwendung im Strang-, Druck- und Formguss herstellen. Auch findet er eine vorteilhafte Verwendung in Glas- und Kunststoff-Formgebungsverfahren, und als Bauteil in thermischen Anlagen sowie im Ofenbau. Wegen der vorteilhaften Eigenschaften des neuen Hybridwerkstoffes bietet sich auch ein Einsatz in weiteren Industriezweigen an, wo auch elektromagnetische Abschirmungen gewünscht werden.

In deren Anwendungen ergeben sich weitere Vorteile:
- Selbstschmierung, eine Reduzierung des Verbrauchs an Hilfsstoffen wie Trennmitteln, Schmierstoffen und Ölen, was auch der Umwelt zuträglich ist,
- eine Steigerung der Standzeit und Notlaufeigenschaften der Vorrichtungen,
- eine Prozessstabilität an Schmelzaggregaten und schmelzkonditionierende Anlagen sowie Fonngebungsmaschinen für Nichteisenwerkstoffe, insbesondere für Aluminium und deren Legierungen.

Der Bedarf an Halbzeugen aus Leichtmetall und Leichtmetallgussteilen steigt weltweit beständig an. Die Geometrien der Bauteile sind vielfältig und aus Gründen der Materialeinsparung werden immer mehr dünnwandige Bauteile mit komplexen Geometrien verlangt. Dadurch ergeben sich erhöhte Anforderungen an Reinheitsgrad und Stabilität der Eigenschaften der Metallschmelze, die durch den neuen Hybridwerkstoff vollständig erbracht werden. Die Produktivität wird durch die Anwendung des neuen Werkstoffes deutlich verbessert.

Der Hybridwerkstoff und daraus bestehende Formteile lassen sich je nach Bedarf in verschiedener Weise herstellen, indem die genannten Komponenten der Matrix sowie der Graphitpartikel und ggf. die Wollastonitstäbchen und/oder das körnige Silikat gemischt werden, und das Gemisch durch Trockenpressen, Filterpressen oder Gießen jeweils zu Rohplatten oder Rohteilen geformt und dann autoklaviert und anschließend getrocknet wird, wobei Platten oder Formteile entstehen.

Alternativ wird vorab das Matrixmaterial, das Xonotlit und/oder Tobermorit für die Matrix aus einer Mischung von Calciumoxiden und/oder -hydroxiden und Siliziumoxiden und/oder Hydroxiden durch Autoklavieren, bevorzugt im Rührautoklaven, hergestellt und anschließend pulverförmig und/oder als Matrixslurry mit dem Graphit und ggf. den Wollastonitstäbchen und/oder dem körnigen Silikat gemischt und nass oder trocken zu Platten oder Formteilen verpresst oder gegossen.
- Fig. 1: zeigt eine 100-fache Vergrößerung des Hybridwerkstoffes mit 16 Gew.-% Graphitpartikel.
- Fig. 2: zeigt einen 3-fach vergrößerten Ausschnitt von Fig. 1.
- Fig. 3: zeigt eine 10.000-fache Vergrößerung einer Grenzzone zwischen Matrixmaterial und einem Graphitpartikel.

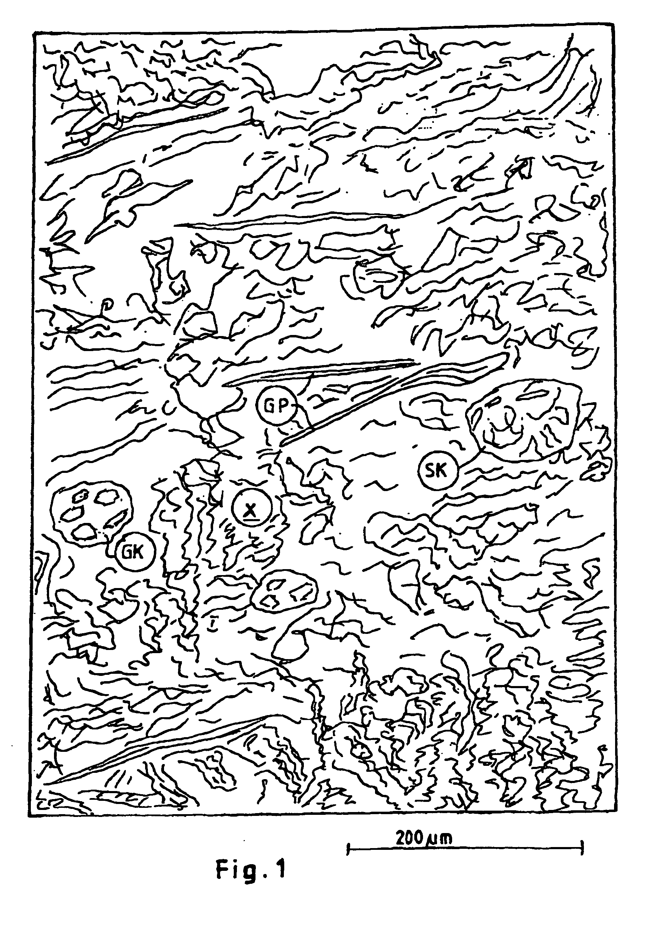

Fig. 1 zeigt eine grob strukturierte Matrix aus dendritischem Xonotlit X, in das im wesentlichen parallel ausgerichtet Graphitpartikel GP, annähernd in Stirnansicht leicht verformt erkennbar eingebettet sind. Außerdem sind ein Graphitkorn GK und ein gerundetes Silikatkorn SK in die Matrix eingefügt. Am Graphitkorn GK sind winzige Graphitkristalle an ihrer stumpfeckigen Gestalt zu erkennen.

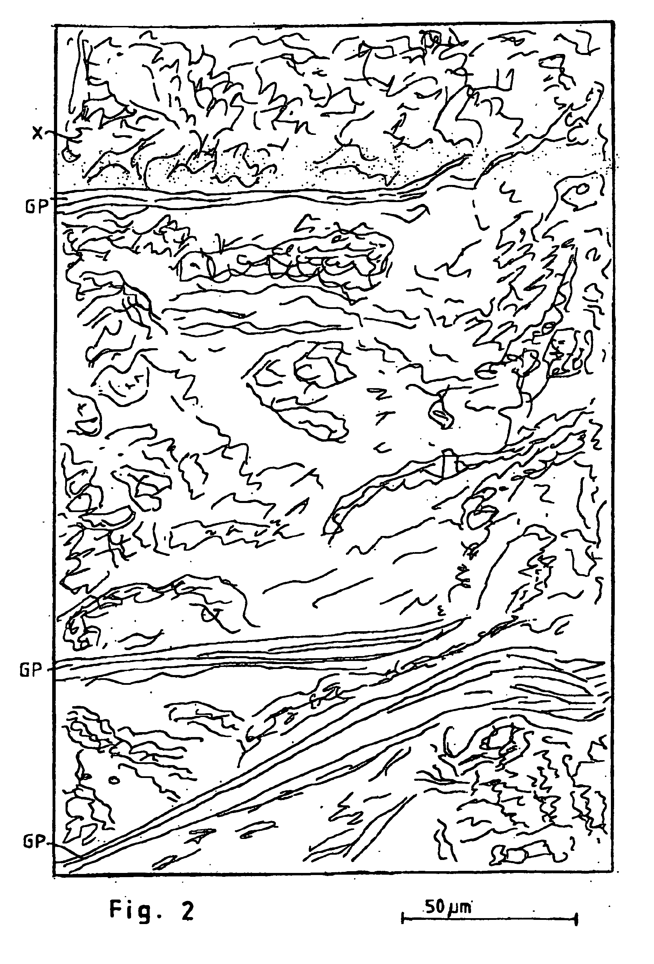

Fig. 2 zeigt durch weitere Vergrößerung eine geordnete Feinstruktur in den Graphitpartikel GP. Die schuppenartig geschichteten Graphitpartikel erscheinen in der leicht schrägen Stimansicht jeweils als ein Linienbündel.

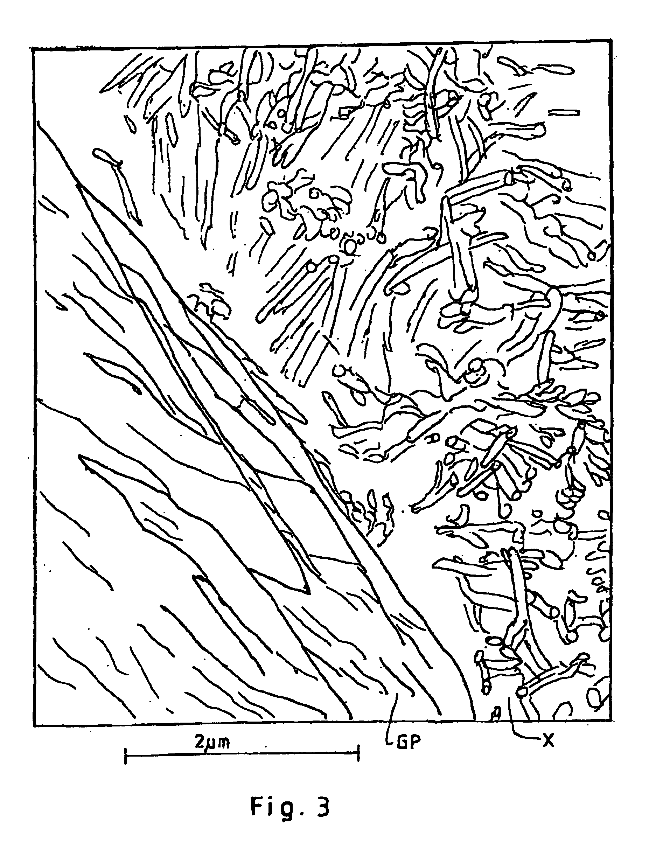

Fig. 3 zeigt in extremer Vergrößerung die schichtartig geordnete gerichtete Struktur an der Oberfläche eines freigelegten Graphitpartikel GP, vor der sich in ca. 1 µm Abstand die winzigen Dendriten der Matrix ungeordnet eng verflochten miteinander befinden. Die verfilzten Dendriten des Xonotlit X sind 1 - 2 µm lang und etwa 0,1 µm dick. Der winzige Spalt zwischen der Matrix und dem Graphitpartikel GP sorgt für einen Abbau von Gefügespannungen bei thermischer und mechanischer Belastung.

### Bezugszeichenliste

| | |
|---|---|
| GK | Graphitkorn |
| GP | Graphitpartikel |
| SK | Silikatkorn |
| X | Xonotlit |

## Patentansprüche

1. Hochtemperaturfester keramischer Hybridwerkstoff mit einer Matrix aus Calcium-Silikat-Hydrat, in die 1 bis 40 Gew.-% Kohlenstoff eingebettet ist, **dadurch gekennzeichnet, dass** der Kohlenstoff zu mindestens 60 % aus Graphitpartikeln (GP) mit einer schuppenartig geschichtet geordneten graphitischen Gitterstruktur besteht und eine mittlere Hauptabmessung von 0,7 mm aufweist und ansonsten der Kohlenstoff aus russartig mikrokristallin stumpfeckigem Graphitkorn (GK) besteht und keine größere Abmessung als die Graphitpartikel (GP) aufweist und die Wärmeleitfähigkeit bei 500 °C größer als 0,35 W (mK) in lateralen Richtung ist.

2. Hybridwerkstoff nach Anspruch 1, **dadurch gekennzeichnet, dass** in ihm die Graphitpartikel (GP) so zueinander flächenparallel orientiert sind, dass er eine Anisotropie der Wärmeleitfähigkeit aufweist.

3. Hybridwerkstoff nach einem der Ansprüche 1 - 2, **dadurch gekennzeichnet, dass** die Graphitpartikel (GP) eine Abmessung von 0,01 - 3 mm und eine Schüttdichte von 0,05 bis 0,5 g/cm³ aufweisen und das Graphitkorn (GK) demgegenüber keine größere Abmessung hat.

4. Hybridwerkstoff nach einem der vorstehenden Ansprüche, **dadurch gekennzeichnet, dass** die Matrix aus dendritischem Xonotlit (X) und/oder Tobermorit besteht und bis zu 65 Gew.-% Wollastonitstäbchen enthält.

5. Hybridwerkstoff nach einem der vorstehenden Ansprüche, **dadurch gekennzeichnet, dass** die Matrix als weiteres körniges Silikat (SK) Zirkonium-Silikat, Lithiumaluminium-Silikat und/oder Calciummagnesium-Silikat bis maximal 15 Gew.-% enthält.

6. Verwendung des Hybridwerkstoffes gemäß einem der vorstehenden Ansprüche, **dadurch gekennzeichnet, dass** aus ihm ein Bauteil zur Kontrolle eines Fliessverhaltens flüssiger NE-Metall Legierungen oder eine Auskleidung zum Strang-, Druck- oder Formgießen von NE-Metallen, von Gläsern oder Kunststoffen oder ein Funktions- oder Strukturbauteil im Ofen- und Anlagenbau oder ein Bauteil für eine elektromagnetische Abschirmung ist.

7. Verfahren zur Herstellung des Hybridwerkstoffes nach einem der Ansprüche 1 - 5, **dadurch gekennzeichnet, dass** die genannten Komponenten der Matrix sowie der Kohlenstoff und ggf. die Wollastonitstäbchen und/oder das körnige Silikat gemischt werden, und das Gemisch durch Trockenpressen, Filterpressen oder Gießen jeweils zu Rohplatten oder Rohteilen geformt und dann autoklaviert und anschließend getrocknet werden, wobei Platten oder Formteile entstehen.

8. Verfahren zur Herstellung des Hybridwerkstoffes nach einem der Ansprüche 1 - 5, **dadurch gekennzeichnet, dass** das Xonotlit und/oder das Tobermorit für die Matrix aus einer Mischung von Calciumoxiden und/oder -hydroxiden und Siliziumoxiden und/oder Hydroxiden durch Autoklavieren in einem Autoklaven oder einem Rührautoklaven hergestellt wird und danach pulverisiert und/oder in einer Matrixslurry mit dem Kohlenstoff und ggf. den Wollastonitstäbchen und/oder dem körnigen Silikat gemischt und dann nass oder trocken zu Platten oder Formteilen verpresst oder gegossen wird.

9. Verfahren nach Anspruch 7, **dadurch gekennzeichnet, dass** die Platten oder Formteile einer Wärmebehandlung bei einer anwendungsgemäßen Temperatur in situ oder in einem Temperofen unterzogen werden, wobei eine reduzierende Atmosphäre oder ein Vakuum bereitgestellt wird, wenn eine Temperatur von über 500 °C bis 1.000 °C gegeben ist.

10. Verfahren nach Anspruch 8, **dadurch gekennzeichnet, dass** die Platten oder Formteile einer Wärmebehandlung bei einer anwendungsgemäßen Temperatur in situ oder in einem Temperofen unterzogen werden, wobei eine reduzierende Atmosphäre oder ein Vakuum bereitgestellt wird, wenn eine Temperatur von über 500 °C bis 1.000 °C gegeben ist.

## Claims

1. A high-temperature-resistant ceramic hybrid material having a matrix of calcium silicate hydrate in which up to 40% by weight of carbon is embedded, **characterized in that** the carbon consists to an extent of over 60% of graphite particles (GP) having a flake-like layered ordered graphitic lattice structure and has an average main dimension of 0.7 mm and otherwise the carbon consists of carbon black-like microcrystalline blunt-cornered graphite grain (GK) and does not have a dimension greater than the graphite particles (GP) and the thermal conductivity in lateral direction is greater than 0.35 W (mK) at 11 500°C.

2. The hybrid material as claimed in claim 1, **characterized in that** the graphite particles (GP) are oriented with their planes parallel to one another in it such that it exhibits an anisotropy of the thermal conductivity.

3. The hybrid material as claimed in either claim 1 or 2, **characterized in that** the graphite particles (GP) have a dimension of 0.01-3 mm and a bulk density of from 0.05 to 0.5 g/cm3 and the graphite grain (GK) has no larger dimension compared thereto.

4. The hybrid material as claimed in any of the preceding claims, **characterized in that** the matrix consists of dendritic xonotlite (X) and/or tobermorite and contains up to 65% by weight of wollastonite rods.

5. The hybrid material as claimed in any of the preceding claims, **characterized in that** the matrix contains zirconium silicate, lithium-aluminum silicate and/or calcium-magnesium silicate in an amount of not more than 15% by weight as further particulate silicate (SK).

6. The use of the hybrid material as claimed in any of the preceding claims, **characterized in that** it is a component for controlling flow behaviour of liquid nonferrous metal alloys or a lining for continuous, pressure or mold casting of nonferrous metals, of glasses or plastics or a functional or structural component in furnace and plant construction or a component for electromagnetic shielding.

7. A process for producing the hybrid material as claimed in any of claims 1-5, **characterized in that** the abovementioned components of the matrix and the carbon and optionally the wollastonite rods and/or the particulate silicate are mixed and the mixture is shaped by dry pressing, filter pressing or casting in each case to give uncured plates or uncured parts and then autoclaved and subsequently dried to form plates or shaped parts

8. A process for producing the hybrid material as claimed in any of claims 1-5, **characterized in that** the xonotlite and/or the tobermorite for the matrix is produced from a mixture of calcium oxides and/or hydroxides and silicon oxides and/or hydroxides by autoclaving in an autoclave or a stirring autoclave and is then mixed in pulverulent form and/or in a matrix slurry with the carbon and optionally the wollastonite rods and/or the particulate silicate and then pressed or cast wet or dry to give plates or shaped parts.

9. The process as claimed in claim 7, **characterized in that** the plates or shaped parts are subjected in situ or in a heat treatment furnace to a heat treatment at a temperature appropriate to the use, with a reducing atmosphere or reduced pressure being provided when a temperature of above 500°C-1000°C prevails.

10. The process as claimed in claim 8, **characterized in that** the plates or shaped parts are subjected in situ or in a heat treatment furnace to a heat treatment at a temperature appropriate to the use, with a reducing atmosphere or reduced pressure being provided when a temperature of above 33 500°C-1000°C prevails.

## Revendications

1. Matériau hybride céramique résistant à haute température comportant une matrice de silicate de calcium hydraté, avec une teneur en carbone de 1 à 40% en poids, **caractérisé en ce que** au moins 60% du carbone consiste en des particules de graphite (GP) ayant une structure graphitique régulièrement réticulée à multiples couches d'écailles et une dimension principale moyenne de 0,7 mm et le reste du carbone consiste en des grains de graphite (GK) microcristallins aux angles obtus, similaires à la suie dont la dimension ne dépasse pas celle des particules de graphite (GP) et dont la conductivité thermique à 500 ° C, dans la direction latérale, est supérieure à 0,35 W (mK).

2. Matériau hybride selon la revendication 1, **caractérisé en ce que** les particules de graphite (GP) sont orientées avec leurs faces parallèles les unes aux autres de telle sorte que le matériau présente des propriétés de conduction thermique anisotropes.

3. Matériau hybride selon l'une des revendications 1 ou 2, **caractérisé en ce que** les particules de graphite (GP) ont une dimension de 0,01 à 3 mm et une masse volumique apparente de 0,05 à 0,5 g/cm³ et que le grain de graphite (GK) n'a pas une dimension plus grande.

4. Matériau hybride selon l'une des revendications précédentes, **caractérisé en ce que** la matrice est constituée de xonotlite dendritique (X) et / ou de tobermorite et contient jusqu'à 65% en poids de tiges de wollastonite.

5. Matériau hybride selon l'une des revendications précédentes, **caractérisé en ce que** la matrice contient, en tant que particules de silicate (SK) additionnelles, du silicate de zirconium, du silicate de lithium-aluminium et / ou du silicate de calcium-magnésium, en une quantité ne dépassant pas 15% en poids.

6. Usage du matériau hybride selon l'une des revendications précédentes, **caractérisé en ce qu'**il constitue soit un composant destiné à contrôler la coulabilité des alliages de métaux non ferreux, soit un revêtement pour la coulée continue, la coulée sous pression ou la coulée en formes de métaux non ferreux, de verres ou de matières plastiques, soit un élément fonctionnel ou structurel dans la construction de fours et d'usines, ou soit un composant pour le blindage électromagnétique.

7. Procédé de fabrication du matériau hybride selon l'une des revendications 1-5. **caractérisé en ce que** lesdits composants de la matrice, le carbone et éventuellement les tiges de wollastonite et / ou les particules de silicate sont mélangés et que le mélange est pressé à sec, pressé à filtre ou coulé pour former des ébauches ou des plaques ébauches qui sont ensuite traitées à l'autoclave et ultérieurement séchées pour obtenir des plaques ou des pièces moulées.

8. Procédé de fabrication du matériau hybride selon l'une quelconque des revendications 1-5, **caractérisé en ce que** la xonotlite et / ou la tobermorite pour la matrice est produite à partir d'un mélange d'oxydes et / ou des hydroxydes de calcium et des oxydes et / ou des hydroxydes de silicium par le traitement à l'autoclave ou à l'autoclave équipé d'un système d'agitation, et qu'elle est ensuite mélangée sous forme pulvérulente et / ou dans une suspension épaisse de matrice avec le carbone et éventuellement avec les tiges de wollastonite et / ou les particules de silicate, et ensuite pressé, à l'état humide ou à sec pour donner des plaques ou des pièces moulées.

9. Procédé selon la revendication 7, **caractérisé en ce que** les plaques ou pièces moulées sont soumises in situ ou dans un four de traitement thermique à un traitement thermique à une température appropriée, dans lequel une atmosphère réductrice ou un vide sont fournis lorsque la température est supérieure à 500 ° C-1000 ° C.

10. Procédé selon la revendication 8, **caractérisé en ce que** les plaques ou pièces moulées sont soumises in situ ou dans un four de traitement thermique à un traitement thermique à une température appropriée, dans lequel une atmosphère réductrice ou un vide sont fournis lorsque la température est supérieure à 500 ° C-1000 ° C.
